# EUROPÄISCHE PATENTSCHRIFT

(11) **EP 1 193 116 B1**
(45) Veröffentlichungstag und Bekanntmachung des Hinweises auf die Patenterteilung: **22.03.2006**
(21) Anmeldenummer: 01121350.1
(22) Anmeldetag: 06.09.2001
(51) Int. Cl.: B60N 2/58

(54) **Schonbezug für ein-oder mehrteilige Autositze mit integrierten Seitenairbags**
Cover for vehicle seats with a unique or multiple parts and integrated side airbags
Housse pour sièges auto réalisés en une seule ou plusieurs parties et munis de sacs gonflables latéraux intégrés

(30) Priorität: 27.09.2000 DE 20016725 U
(43) Veröffentlichungstag der Anmeldung: 03.04.2002
(73) Patentinhaber: Diana KFZ-Textil GmbH, 92660 Neustadt (DE)
(72) Erfinder: Unger, Angelika, 92637 Weiden (DE)
(74) Vertreter: Hennicke, Ernst Rüdiger

(56) Entgegenhaltungen:
- EP-A- 0 864 460
- EP-A- 0 926 014
- DE-A- 19 727 746
- DE-U- 20 007 237
- DE-U- 20 008 529
- DE-U- 29 620 382
- PATENT ABSTRACTS OF JAPAN vol. 1998, no. 10, 31. August 1998 (1998-08-31) & JP 10 119694 A (MIYATA:KK), 12. Mai 1998 (1998-05-12)

## Beschreibung

Die Erfindung betrifft einen Schonbezug für ein- oder mehrteilige Autositze mit integrierten Seitenairbags, bestehend wenigstens aus einem Lehnenbezug, der als sogenannter Schonbezug über der Autositzlehnenpolsterung anordbar ist, wobei die Autositzlehnen auf ihren den Fahrzeugtüren zugewandten Seiten so ausgebildet sind, daß sie die sich explosionsartig aufblasenden Airbags ungehindert austreten lassen und die über den Polsterbezügen angeordneten Schonbezüge im Austrittsbereich der Airbags Öffnungen aufweisen, die durch Stoffüberlappungen und -abdeckungen o.dgl. bedeckt sind, welche sich im Falle der Explosion der Airbags öffnen und die Airbags durch den Schonbezug hindurch austreten lassen.

Derartige Schonbezüge, die beispielsweise aus den Gebrauchsmustern 296 20 382 und 297 04 593 bekannt sind, haben den Nachteil, daß bei der Montage diese Bezüge auf den Autositzen insbesondere darauf geachtet werden muß, daß die Bezüge nicht verwechselt werden, was bedeutet, daß der beispielsweise für den linken Autositz bestimmte Bezug, der in der Regel sowohl abmessungsmäßig als auch seinem äußeren Erscheinungsbild nach dem für den rechten Autositz bestimmten Bezug gleicht, mit letzterem nicht verwechselt werden darfund umgekehrt, da anderenfalls die Seite des Fahrzeugsitzes, in der sich der oder die Airbags befinden, mit einer geschlossenen Schonbezugobeffliche bedeckt wird, so daß der Airbag im Explosionsfalle sich nicht ordnungsgemäß entfalten kann.

Zur Vermeidung der dadurch gegebenen Sicherheitsmängel wurde bereits vorgeschlagen, den Lehnenbezug und/oder Sitzbezug an beiden Seiten des Autositzes mit wenigstens einer durch eine Überlappung oder Abdeckung versehenen Öffnung auszustatten, so daß ein und derselbe Lehnenbezug bzw. Sitzbezug sowohl für den rechten als auch für den linken Autositz verwendbar ist, jedenfalls als seitenairbagtauglich angesehen werden kann Ein Schonbezug, mit der Merkmalen des Oberbegriffs des 1. Anspruchs, ist z.B. aus der DE-U-20007237 bekannt. Der Erfindung liegt die Aufgabe zugrunde, diese vorgeschlagene Ausbildung des Schonbezuges, insbesondere Lehnenbezugs, weiter zu verbessern.

Dies geschieht erfindungsgemäß dadurch, daß zwei annähernd parallele. Öffnungständer aufweisen, von denen der eine mit einem Gummiband eingefaßt ist und der andere mit einem Saumrand. Die Ausbildung von parallelen Öffnungsrändern mit unterschiedlicher Qualität führt zu einer Verbesserung der Montage des Lehnenbezuges, wobei dann, wenn der oder die Gummibänder sich an dem vorderseitigen Teil des Lehnenbezuges befinden und die Saumränder an dem hinterseitigen Teil, der Bezug an seinen beiden Seitenflächen im Bereich der Öffnungen dehnbar ist, um die Saumränder, die Stofflappen begrenzen, deren in Richtung der Lebnentiefe gemessenen Breite größer oder gleich der Lehnenseitenflächenseite ist, in den seitlichen Öffnungen des Bezugs unterzubringen, gewissermaßen dort verschwinden zu lassen, wobei, gemäß einer weiteren Ausgestaltung der Erfindung, auf der Rückseite der Gummibänder bzw. des Bezugsstoffes, den sie einfassen, ein Klettverschlußband angebracht ist, das mit der Oberseite der Stofflappen in Eingriff bringbar ist, um die schlitzförmige Öffnung zu schließen.

Die Erfindung wird nachfolgend anband von in der Zeichnung dargestellten Ausführungsbeispielen näher erläutert. In der Zeichnung zeigen:
- Fig. 1: eine schematisierte Vorderansicht eines Lebnenschonbezugs im auf der nicht dargestellten Sitzlehne montierten Zustand und
- Fig. 2: eine schematisierte Vorderansicht des Lehnenschonbezugs von Fig. 1 vor der Montage mit geöffneten Öffnungsschlitzen an den Schonbezugsseitenflächen.

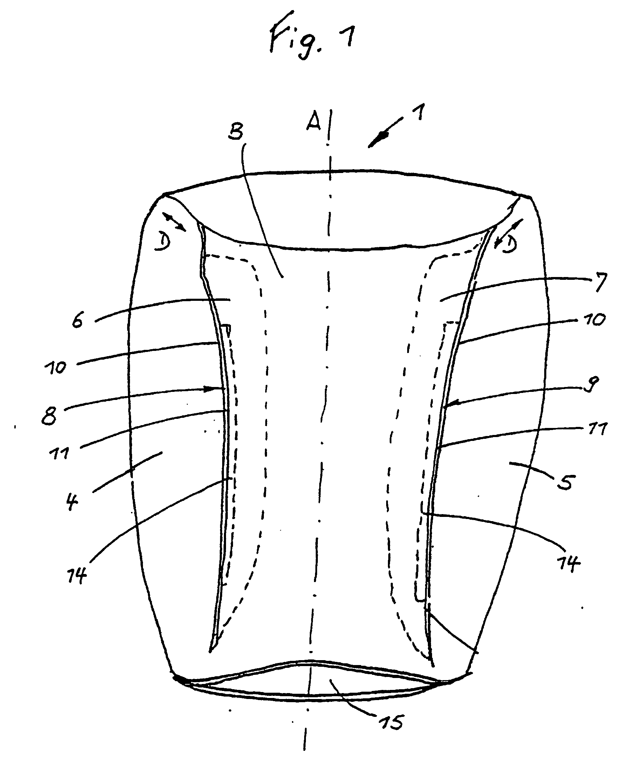

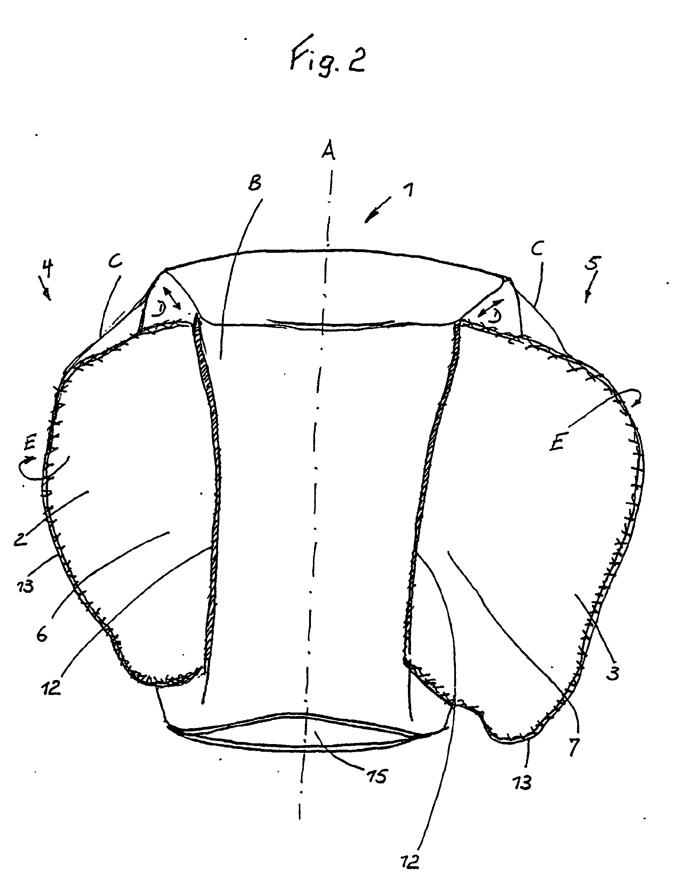

Der Schonbezug 1 der Figuren 1 und 2 ist sowohl für den Fahrersitz eines Pkws als auch für den Beifahrersitz, beide ausgestattet mit Seitenairbags, geeignet. Er wird zu diesem Zweck in bekannter Weise über die Autositzlehnenpolsterung gestülpt und hat im übergestülpten, also montierten Zustand etwa das in Fig. 1 dargestellte Aussehen. Dieser Lehneoschonbezug kennzeichnet sich insbesondere dadurch, daß er auf beiden Seiten 4, 5 des nicht dargestellten Autositzes mit einer durch eine Überlappung 6, 7 oder Abdeckung überdeckten schlitzförmigen Öffnung 8, 9 versehen ist, die in Fig. 1 im geschlossenen Zustand dargestellt ist. Die beiden schlitzförmigen Öffnungen 8, 9 sind gleich groß und symmetrisch zu einer gedachten Schonbezugsmittellinie A angeordnet. Sie weisen zwei annähernd parallele Öffnungsränder 10, 11 auf, von denen der eine mit einem Gummiband 12 eingefaßt ist und der andere mit einem Saumrand 13, wie insbesondere aus Fig. 2 ersichtlich, also einer Darstellung des Lehnenschonbezugs, bei der die schlitzförmigen Öffnungen noch nicht geschlossen sind.

Wie insbesondere aus Fig. 2 ersichtlich, befinden sich die Gummibänder 12 an dem vorderseitigen Teil B des Lebnenbezugs 1 und die Saumränder 13 an dem hinterseitigen Teil C, wobei letztere im montierten Zustand von Fig. 1 von den Gummibändern 12 bzw. Öffnungsrändern 10 abgedeckt sind.

Die Saumränder 13 begrenzen Stoffiappen 2, 3, deren in Richtung der Lehnentiefe D gemessenen Breite größer ist als die Lehnenseitennachenbreite, wie in Fig. 2 dargestellt, jedoch auch gleich groß sein kann. Diese Stofflappen, die also Teil des Schonbezugs sind, werden bei der Montage des Bezuges in Richtung des Pfeils E nach innen umgeschlagen, so daß die Saumränder 13 unter den Gummirändem 12 zu liegen kommen und damit unter dem vorderseitigen Teil B des Lehnenbezugs 1, so daß sich etwa die in Fig. 1 dargestellte Konfiguration ergibt, bei der die Saumränder 13 der Stofflappen 2 und 3 mit gestrichelten Linien dargestellt sind.

Beim Montieren, d.h. also Überstülpen des Lehnenbezugs 1 über den Fahrzeugsitz wird die Öffnung 15 des Bezuges über die Sitzlehne des Fahrzeuges gestülpt. Nach dem Umlegen der Stofflappen 2 und 3 in Richtung des Pfeils E, also im eingebauten Zustand des Lebnenbezugs 1, in dem die Stofflappen unter den Gummirändern 12 liegen, von diesen also überlappt werden, treten die auf der Rückseite der Gummibänder 12 befindlichen Klettverschlußbänder 14 mit der Oberseite der beiden Stofflappen 2 und 3 in Eingriff, wodurch die schlitzförmigen Öffnungen 8 und 9 verschlossen werden, wie dies in Fig. 1 angedeutet ist, wo auch die Klettverschlußbänder 14, deren Länge und Breite wählbar sind, in gestrichelter Linienführung dargestellt sind.

Auf diese Weise wird ein universal verwendbarer Sitzlehnenschonbezug geschaffen, der sich einfach montieren läßt, ohne daß eine besondere Einbauanordnung im Hinblick auf die Lage von Seitenairbags zu beachten ist, da der Bezug symmetrisch ausgebildet ist, also beidseitig Öffnungen für den Airbagaustritt aus dem Sitzpolster der Kraftfahrzeugsitzlehne aufweist, und dessen beide Öffnungen nach der Montage des Bezugs aufgrund der Überlappungen und der Klettverschlußbänder nicht nur geschlossen gehalten werden, sondem auch ihre ein sicheres Austreten der Airbags gewährleistende Position auf dem Sitz beibehalten.

## Patentansprüche

1. Schonbezug für ein- oder mehrteilige Autositze mit integrierten Seiteuairbags, bestehend wenigstens aus einem Lebnenbezug, der als sogenannter Schonbezug über der Autositzlehnenpolsterung anordbar ist, wobei die Autositzlehnen auf ihren den Fahrzeugtüren zugewandten Seiten so ausgebildet sind, daß sie die sich explosionsartig aufblasenden Airbags ungehindert austreten lassen und die über den Polsterbezügen angeordneten Schonbezüge im Austrittsbereich der Airbags Öffnungen aufweisen, die durch Stoffüberlappungen und -abdeckungen o.dgl. bedeckt sind, welche sich im Falle der Explosion der Airbags öffnen und die Airbags durch den Schonbezug hindurch austreten lassen, wobei der Lehnenbezug (1) auf beiden Seiten (4, 5) des Autositzes mit einer durch eine Überlappung (6, 7) oder Abdeckung überdeckten schlitzförmigen Öffnung (8, 9) versehen ist, wobei die beiden Öffnungen (8, 9) gleich groß und symmetrisch zu einer gedachten Schonbezugsmittellinie A positioniert sind, **dadurch gekennzeichnet daß** beiden Öffnungen zwei annähernd parallele Öffnungsränder (10, 11) aufweisen, von denen der eine mit einem Gummiband (12) eingefaßt ist und der andere mit einem Saumrand (13).

2. Schonbezug nach Anspruch 1, **dadurch gekennzeichnet, daß** sich die Gummibänder (12) an dem vorderseitigen Teil B des Lehnenbezugs (1) befinden und die Saumränder (13) an dem hinterseitigen Teil C des Lehnenbezugs (1) derart, daß die Saumränder im montierten Zustand des Lehnenbezugs (1) von den Gummibändern (12) bzw. Öffnungsrändern (10) abgedeckt sind.

3. Schonbezug nach Anspruch 1 oder 2, **dadurch gekennzeichnet, daß** die Saumtänder (13) Stofflappen (2, 3) begrenzen, deren in Richtung der Lehnentiefe D gemessene Breite größer oder gleich der Lehnenseitenflächenbreite ist.

4. Schonbezug nach Anspruch 3, **dadurch gekennzeichnet, daß** die Stofflappen (2, 3) im eingebauten Zustand des Lehnenbezugs (1) unter den Gummibändern (12) liegen, auf deren Rückseite ein Klettverschlußband (14) angebracht ist, das mit der Oberseite der Stofflappen (2, 3) in Eingriff bringbar ist, um die schlitzförmige Öffnung (8, 9) zu schließen.

## Claims

1. Protective over for vehicle seats with a unique or multiple parts having integrated side airbags consisting of at least one backrest cover which can be arranged over the car seat backrest cushioning as a so-called protective cover, whereby the car seat backrests are formed on the sides facing the car doors in such a manner that they let the airbags which inflate in an explosive manner exit in an unimpeded manner and the covers arranged over the cushioning covers comprise openings in the exit region of the airbags which are covered by material overlaps and coverings or the like which open in the case of the explosion of the airbags and let the airbags exit through the protective cover, whereby the backrest cover (1) is provided with a slot-shaped opening (8, 9) on both sides (4, 5) of the car seat, covered with an overlap (6, 7) or a covering, whereby the two openings (8, 9) have the same size and are positioned symmetrically to an imaginary protective cover centre line A, **characterised in that** the two openings comprise two approximately parallel opening edges (10, 11), one of which is enclosed with an elastic band (12), and the other one with a hemmed edge (13).

2. Protective cover according to claim 1, **characterised in that** the elastic bands (12) are located at the front side part B of the backrest cover (1) and the hemmed edges (13) at the rear side part C of the backrest cover (1) in such a manner that the hemmed edges are covered by the elastic bands (12) or the opening edges (10) in the mounted state of the backrest cover (1).

3. Protective cover according to claim 1 or 2, **characterised in that** the hemmed edges (13) define material flaps (2, 3) the width of which, measured in the direction of the backrest depth D, is larger or the same as the backrest side area width.

4. Protective cover according to claim 3, **characterised in that** the material flaps (2, 3) are positioned under the elastic bands (12) in the fitted state of the backrest cover (1), on the rear side of which bands is attached a Velcro fastening band (14) which can be brought into engagement with the upper side of the material flaps (2, 3) so as to close the slot-shaped opening (8, 9).

## Revendications

1. Housse pour sièges auto réalisés en une seule ou plusieurs parties et munis de sacs gonflables latéraux intégrés, la housse étant au moins constituée d'un revêtement de dossier, qui peut être installé sur le rembourrage du dossier de siège auto à titre de ce que l'on appelle une housse, tandis que les dossiers de siège auto sont réalisés sur leurs côtés tournés vers les portes du véhicule de façon à laisser sortir sans encombre les sacs gonflables se gonflant de manière explosive et que les housses installées sur les revêtements de rembourrage présentent dans la zone de sortie des sacs gonflables des ouvertures qui sont recouvertes par des chevauchements et recouvrements d'étoffe ou analogues, qui s'ouvrent en cas d'explosion du sac gonflable et laissent sortir les sacs gonflables à travers la housse, le revêtement de dossier (1) étant muni, des deux côtés (4, 5) du siège auto, d'une ouverture en forme de fente (8, 9) recouverte par un chevauchement (6, 7) ou recouvrement, les deux ouvertures (8, 9) étant de même taille et positionnées symétriquement par rapport à un axe idéal (A) de la housse, **caractérisée en ce que** les deux ouvertures présentent des bords d'ouverture (10, 11) à peu près parallèles, bordés l'un d'une bande caoutchouc (12) et l'autre d'un ourlet (13).

2. Housse selon la revendication 1, **caractérisée en ce que** les bandes caoutchouc (12) se trouvent sur la partie avant B du revêtement de dossier (1) et les ourlets (13) sur la partie arrière C du revêtement de dossier (1) de sorte qu'à l'état monté, les ourlets du revêtement de dossier (1) sont recouverts par les bandes caoutchouc (12) et respectivement les bords d'ouverture (10).

3. Housse selon la revendication 1 ou 2, **caractérisée en ce que** les ourlets (13) délimitent des rabats d'étoffe (2, 3) dont la largeur mesurée dans la direction de l'épaisseur D du dossier est supérieure ou égale à la largeur des faces latérales du dossier.

4. Housse selon la revendication 3, **caractérisée en ce que** lorsque le revêtement de dossier (1) est à l'état installé, les rabats d'étoffe (2, 3) se trouvent sous les bandes caoutchouc (12) au dos desquelles est posée une bande de fermeture agripante (14) qui peut être amenée en prise avec le dessus des rabats d'étoffe (2, 3) pour fermer l'ouverture en forme de fente (8,9).
